# EUROPEAN PATENT SPECIFICATION

(11) **EP 1 344 563 B1**
(45) Date of publication and mention of the grant of the patent: **03.10.2007**
(21) Application number: 03014832.4
(22) Date of filing: 19.03.1999
(51) Int. Cl.: B01J 8/00, B01D 3/06, B01J 19/18, C08F 6/00

(54) **Continuous slurry polymerisation volatile removal**
Kontinuierliches Entfernen flüchtiger Bestandteile aus Suspensionspolymerisation
Elimination continue de suspension de polymérisation volatile

(30) Priority: 20.03.1998 US 78859 P; 18.05.1998 US 80412; 18.05.1998 US 81392
(43) Date of publication of application: 17.09.2003
(62) Divisional of application: 99913995.9
(73) Proprietor: CHEVRON PHILLIPS CHEMICAL COMPANY LP, The Woodlands, TX 77380 (US)
(72) Inventor: Kendrick, James Austin, Baton Rouge, Louisiana 70811 (US)
(74) Representative: Denness, James Edward

(56) References cited:
- EP-A- 0 415 427
- US-A- 4 424 341
- US-A- 5 575 979

## Description

### FIELD OF INVENTION

The present invention relates to an apparatus for continuously separating polymer solids from a liquid medium comprising an inert diluent and unreacted monomers. In particular, the present invention relates to an apparatus for continuously separating polymer solids from a liquid medium, drying the polymer, and recovering the diluent and unreacted monomers with a reduction in compression needed for diluent vapor condensation to liquid diluent for reuse in a polymerization process. In another aspect, the invention relates to a method for continuously separating polymer solids from a liquid medium. In particular, the invention relates to a method for continuously separating polymer solids from a liquid medium, drying the polymer, and recovering the inert diluent and unreacted monomers for reuse in a polymerization process.

### BACKGROUND OF THE INVENTION

In many polymerization processes for the production of polymer, a polymerization effluent is formed which is a slurry of particulate polymer solids suspended in a liquid medium, ordinarily the reaction diluent and unreacted monomers. A typical example of such processes is disclosed in Hogan and Bank's U.S. Pat. No. 2,285,721, the disclosure of which is incorporated herein by reference. While the polymerization processes described in the Hogan document employs a catalyst comprising chromium oxide and a support, the present invention is applicable to any process producing an effluent comprising a slurry of particulate polymer solids suspended in a liquid medium comprising a diluent and unreacted monomer. Such reaction processes include those which have come to be known in the art as particle form polymerizations.

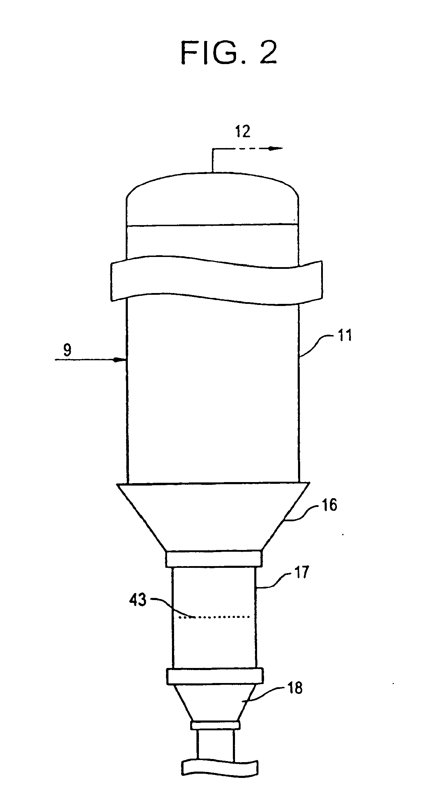

In most commercial scale operations, it is desirable to separate the polymer and the liquid medium comprising an inert diluent and unreacted monomers in such a manner that the liquid medium is not exposed to contamination so that the liquid medium can be recycled to the polymerization zone with minimal if any purification. A particularly favored technique that has been used heretofore is that disclosed in the Scoggin et al, U.S. Pat. No. 3,152,872, more particularly the embodiment illustrated in conjunction with Fig. 2 of that patent. In such processes the reaction diluent, dissolved monomers, and catalyst are circulated in a loop reactor wherein the pressure of the polymerization reaction is about 100 to 700 psia. The produced solid polymer is also circulated in the reactor. A slurry of polymer and the liquid medium is collected in one or more settling legs of the slurry loop reactor from which the slurry is periodically discharged to a flash chamber wherein the mixture is flashed to a low pressure such as about 20 psia. While the flashing results in substantially complete removal of the liquid medium from the polymer, it is necessary to recompress the vaporized polymerization diluent (i.e., isobutane) in order to condense the recovered diluent to a liquid form suitable for recycling as liquid diluent to the polymerization zone. The cost of compression equipment and the utilities required for its operation often amounts to a significant portion of the expense involved in producing polymer.

Some polymerization processes distill the liquefied diluent prior to recycling to the reactor. The purpose of distillation is removal of monomers and light-end contaminants. The distilled liquid diluent is then passed through a treater bed to remove catalyst poisons and then on to the reactor. The equipment and utilities costs for distillation and treatment can be a significant portion of the cost of producing the polymer.

In a commercial scale operation, it is desirable to liquefy the diluent vapors at minimum cost. One such technique used heretofore is disclosed in Hanson and Sherk's U.S. Pat. No. 4,424,341 in which an intermediate pressure flash step removes a significant portion of the diluent at such a temperature and at such a pressure that this flashed portion of diluent may be liquified by heat exchange instead of by a more costly compression procedure.

### BRIEF SUMMARY OF THE INVENTION

The present invention relates to an apparatus for continuously separating polymer solids from a liquid medium comprising an inert diluent and unreacted monomers. In another aspect, the invention relates to an apparatus for continuously separating polymer solids from a liquid medium, drying the polymer, and recovering the diluent and unreacted monomers with a reduction in compression needed for diluent vapor condensation to liquid diluent for reuse in a polymerization process. In another aspect, the invention relates to a method for continuously separating polymer solids from a liquid medium. In another aspect, the invention relates to a method for continuously separating polymer solids from a liquid medium, drying the polymer, and recovering the inert diluent and unreacted monomers for reuse in a polymerization process.

In accordance with the present invention, there is provided an apparatus for continuously recovering polymer solids from a polymerization effluent comprising a slurry of said polymer solids in a liquid medium comprising an inert diluent and unreacted monomers. The apparatus comprises a discharge valve on a slurry reactor, examples of which include slurry loop reactors and stirred tank slurry reactors, for the continuous discharge of a portion of the slurry reactor contents into a first transfer conduit: a first flash tank having a bottom defined by substantially straight sides inclined at an angle to the horizontal equal to or greater than the angle of slide of the slurry/polymer solids; wherein the pressure of the first flash tank and temperature of the polymerization effluent are such that from about 50% to about 100% of the liquid medium will be vaporized and the inert diluent component of said vapor is condensable, without compression, by heat exchange with a fluid having a temperature in the range of about 65° F to about 135°F: a first flash tank exit seal chamber, communicating with said first flash tank, of such a length (l) and diameter (d) as to permit such a level of concentrated polymer solids/slurry to accumulate and form a pressure seal in said first flash tank exit seal chamber: a seal chamber exit reducer providing for a continuous discharge of a plug flow of concentrated polymer solids/slurry to a second transfer conduit which communicates the concentrated polymer solids/slurry into a second flash tank wherein the pressure of said second flash tank and temperature of the concentrated polymer solids/slurry are such that essentially all of any remaining inert diluent and/or unreacted monomer will be vaporized and removed overhead for condensation by compression and heat exchange and the polymer solids are discharged from the bottom of said second flash tank for additional processing or storage.

The invention provides also a method for the continuous removal of a stream of polymerization effluent from a slurry reactor through a discharge valve; increasing the heat content of the polymerization effluent during its transit through said first transfer conduit to a temperature below the fusion point of the polymer while continuously communicating the polymerization effluent to a first flash tank having a bottom defined by substantially straight sides inclined at an angle to the horizontal equal to or greater than the angle of slide of the concentrated polymer solids/slurry; continuously vaporizing from about 50% to about 100% of the liquid medium in said first heated flash tank to yield a concentrated polymer solids/slurry and a vapor stream at such a temperature and pressure that the inert diluent content of said vapor is condensable, without compression, by heat exchange with a fluid having a temperature in the range from about 65°F to about 135°F; continuously discharging the concentrated polymer solids/slurry from said first flash tank to a first flash tank exit seal chamber of such a length (I) and diameter (d) that a volume of concentrated polymer solids/slurry is continuously maintained so as to form a pressure seal in said first flash tank exit seal chamber; continuously discharging the concentrated polymer solids/slurry from said first flash tank seal chamber through a seal chamber exit reducer defined by substantially straight sides inclined at an angle to that of horizontal equal to or greater than the angle of slide of the polymer solids which remain after removal of about 50 to 100% of the inert diluent therefrom; communicating a continuous plug flow of concentrated polymer solids/slurry from said first flash tank exit seal chamber through said seal chamber exit reducer to a second transfer conduit which communicates said continuous plug flow of concentrated polymer solids/slurry to a second flash tank; and continuously vaporizing essentially all of any remaining inert diluent and/or unreacted monomer in a second flash tank operated at a lower pressure than said first flash tank; condensing the vaporized inert diluent and/or unreacted monomer from said second flash tank by compression and heat exchange; and continuously discharging the essentially dried polymer slurry from said second flash tank for further processing or storage.

An object of the present invention is to provide-both an apparatus and method for the continuous two stage flash drying of the polymer solids following the continuous removal of the polymerization effluent comprising polymer solids and liquid medium comprising inert diluent and unreacted monomers from a slurry reactor through a point discharge valve, a continuous solids level control in the first flash tank exit seal chamber that provides a pressure seal therein which enables said first flash tank to operate under a substantially greater pressure than said second flash tank while polymer solids are continuously discharged through the seal chamber exit reducer into the second transfer conduit and further into the second flash tank which eliminates plugging in the first flash tank and the continuous liquification of from about 50% to about 100% of the inert diluent vapor by heat exchange rather than compression.

Another object of the invention is to eliminate the need for a settling leg on the slurry reactor and the intermittent high pressure pulse in the slurry reactor caused by periodic discharging of the contents of the settling leg. Another object of the present invention is to improve safety by eliminating the possibility of plugging in a settling leg.

Another object of the invention is to eliminate plugging in equipment downstream from the discharge valve. In a settling leg of a polymerization reactor polymerization continues and the heat of reaction further heats the liquid medium and a potential exists for some of the polymer solids to dissolve or to fuse together. As the contents of the settling leg exit the discharge valve, the pressure drop causes flashing of some of the liquid medium which results in cooling the remaining liquid medium causing the dissolved polymer to precipitate which tends to plug downstream equipment. The present invention which eliminates the need for a settling leg also eliminates this potential for downstream equipment plugging by avoiding the initial dissolution or fusion of the polymer solids.

Another object of the present invention is to increase the reactor through-put by the use of increased ethylene concentrations in the liquid medium, e.g., greater than or equal to 4 weight percent at reactor outlet. Settling legs limit ethylene concentrations due to an increased tendency to plug downstream equipment caused by accelerated reaction within the settling leg. A continuous polymerization effluent slurry flow allows ethylene concentrations to be limited only by the ethylene solubility in the liquid diluent in the reactor, thereby increasing the specific reaction rate for polymerization and increasing reactor throughput.

In a third aspect, the invention provides an apparatus for removing and recovering polymerization liquid medium from a polymer produced in a reactor as a polymer slurry of particulate polymer solids suspended in a liquid medium comprising an inert diluent and unreacted monomers, the apparatus comprising,
a discharge valve for continuously discharging a portion of said polymer slurry from said reactor into a first transfer conduit;
said first transfer conduit communicating said polymer slurry therein into a first flash tank having a bottom communicating to a first flash tank exit seal chamber of a length (l) and a diameter (d) which provides a volume sufficient to maintain a volume of polymer solids/slurry sufficient to maintain a pressure seal in said seal chamber;
said seal chamber having a seal chamber exit reducer, defined by substantially straight sides inclined at an angle to that of horizontal equal to or greater than the angle of slide of the polymer solids which remain after removal of about 50 to 100% of the inert diluent therefrom which communicates a continuous flow of concentrated polymer solids/slurry from said first flash tanks exit seal chamber to a second transfer conduit which communicates said continuous flow of concentrated polymer solids/slurry to a second flash tank; and
said second flash tank operating at a substantially lesser pressure than that of said first flash tank such that essentially all of any remaining inert diluent and monomer is vaporized and communicated to a diluent and monomers recovery system through a flash tank overhead exit and essentially dried polymer solids are communicated to a dryer/storage tank.

Optionally, in that third aspect, the first flash tank has a bottom defined by substantially straight sides inclined at an angle to that of horizontal equal to or greater than the angle of slide of the concentrated polymer solids/slurry which remain after removal of about 50 to 100% of the inert diluent therefrom. Said first flash tank exit seal chamber optionally has a volume of a continuous plug flow of said concentrated polymer wherein said volume of continuous plug flow of said concentrated polymer/slurry solids has a length (l) to diameter (d) ratio (l/d) of from about 1.5 to about 8.0. Optionally, said first transfer conduit is heated by a heater means capable of providing a quantity of heat sufficient to maintain said polymer slurry therein at a temperature below the fusion temperature of the polymer.

In a fourth aspect, the invention provides a process for producing polymer comprising producing a polymer slurry in a liquid medium which comprises:
reacting a monomer in a hydrocarbon diluent inert to polymerization to form a polymerization effluent;
continuously discharging said polymerization effluent through a discharge valve into a first transfer conduit;
heating said polymerization effluent in said first transfer conduit to a temperature below the fusion temperature of the polymer;
continuously communicating said polymerization effluent through said first transfer conduit to a first flash tank wherein the pressure in said first flash tank and the temperature of said heated polymerization effluent are such as to produce as a vapor from about 50% to about 100% of the liquid medium and said vapor is condensable, without compression, by heat exchange with a fluid having a temperature in the range of about 65° F to about 135° F;
continuously condensing said vapor obtained in said first flash step, without compression, by heat exchange with a fluid having a temperature in the range of about 65° F to about 135°F;
continuously discharging from said first flash tank concentrated polymer solids/slurry to a second flash tank through a seal chamber wherein said seal chamber has a length (l) and a diameter (d) such as to maintain a volume of concentrated polymer solids/slurry in the said seal chamber sufficient to maintain a pressure seal;
continuously communicating said concentrated polymer solids/slurry to a second flash tank through a seal chamber exit reducer defined by substantially straight sides inclined at an angle to that of horizontal equal to or greater than the angle of slide of the polymer solids which remain after removal of about 50 to 100% of the inert diluent therefrom;
continuously exposing the remaining liquid medium in said concentrated polymer solids/slurry to a further pressure reduction from a higher pressure of from about 140 psia to about 315 psia in said first flash tank to a lower pressure of from about 15 psia to about 35 psia in said second flash tank wherein the pressure of said second flash tank and the temperature of said heated concentrated polymer slurry are such as to produce as a vapor substantially all of the remaining diluent and monomer and said vapor is condensable with compression and cooling; and
discharging from said second flash tank polymer solids which are substantially free of diluent or unreacted monomer.

Optionally, in that fourth aspect, the first flash tank has a bottom defined by substantially straight sides inclined at an angle to that of horizontal equal to or greater than the angle of slide of the concentrated polymer solids/slurry which remain after removal of about 50 to 100% of the inert diluent therefrom.
Optionally, said first transfer conduit is heated by a heater means of a heating capacity capable of providing a quantity of heat sufficient to bring said polymer slurry therein to a temperature below the fusion temperature of the polymer solids. Optionally, said liquid diluent is isobutane. Optionally, the liquid medium comprises increased ethylene concentrations greater than or equal to 4 weight percent at the reactor outlet. Optionally, the rate of discharge of the polymerization effluent maintains a constant pressure in the slurry reactor. Optionally, the residence time of the concentrated polymer solid/slurry in the seal chamber is from 5 seconds to 10 minutes. Optionally, the residence time of the concentrated polymer solid/slurry in the seal chamber is from 10 seconds to 2 minutes. Optionally, the residence time of the concentrated polymer solid/slurry in the seal chamber is from 15 seconds to 45 seconds. Optionally, substantially any remaining inert diluent and unreacted monomer in the concentrated polymerization effluent in the second flash tank is vaporized and removed. Optionally, the discharge valve discharges the polymerization effluent at a rate to maintain a constant pressure in the slurry reactor.

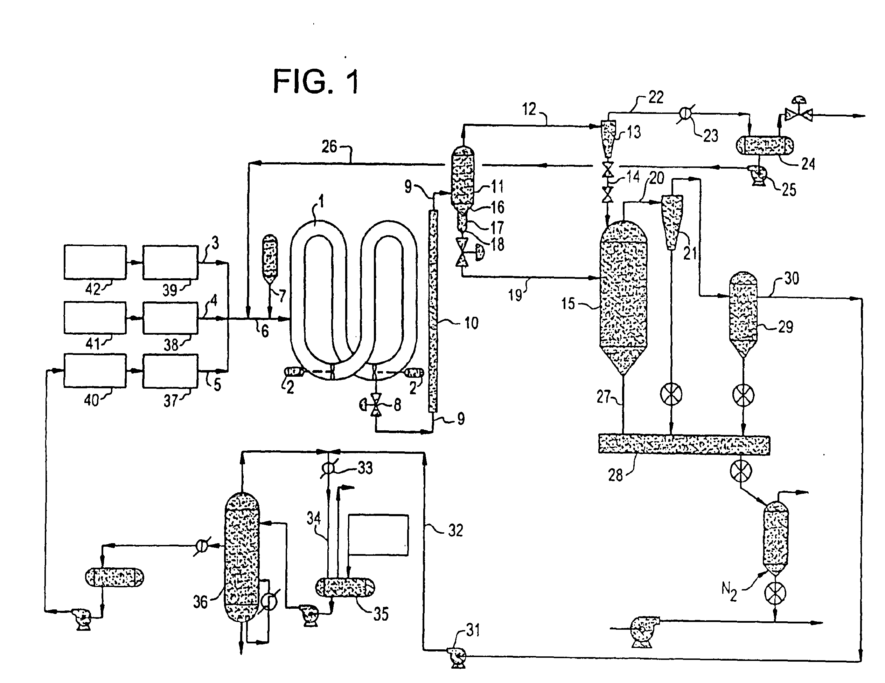

Other aspects, objects, and advantages of the present invention will be apparent from the following disclosure and Figures 1 and 2.

The claimed apparatus and process provide several advantages over the prior art including: (1) allowing for a continuous processing of the contents of a slurry reactor from the point of discharge of the liquified polymerization effluent through a discharge valve; a first flash tank; a seal chamber; a seal chamber exit reducer; and therefrom to a second flash tank, (2) significantly increasing ethylene concentration in the liquid medium thereby increasing reactor through-put and (3) energy consumption is reduced by reducing the need to compress and/or distill the reactor vapor-liquid effluent. Recycling compressors and other downstream equipment can be reduced in size or eliminated.

### BRIEF DESCRIPTION OF THE DRAWING

Figs. 1 and 2 are a schematic diagram illustrating an apparatus for continuously separating polymer solids from diluent and unreacted monomer in accordance with the present invention.

### DETAILED DESCRIPTION OF THE INVENTION

The present invention is applicable to any mixture which comprises a slurry of polymer solids and a liquid medium comprising an inert diluent and unreacted monomers including slurries resulting from olefin polymerization. The olefin monomers generally employed in such reactions are 1-olefins having from 2 up to 8 carbon atoms per molecule. Typical examples include ethylene, propylene, butene, pentene, hexene and octene.

Typical diluents employed in such olefin polymerizations include saturated aliphatic hydrocarbons having 3 to 8, preferably 3 to 4 carbon atoms per molecule, such as propane, isobutane, propylene, n-butane, n-pentane, isopentane, n-hexane, isooctane, and the like. Of these diluents those of 3 to 4 carbon atoms per molecule are preferred, and isobutane is most preferred.

The rate of discharge of the polymerization effluent is such as to allow a continuous process stream from the slurry loop reactor from the point of discharge of the liquified polymerization effluent through a single point discharge valve and also through the first flash tank and the associated vapor recovery and solids recovery systems. The rate of discharge of the polymerization effluent is such as to maintain a constant pressure in the slurry reactor and to eliminate intermittent high pressure pulses associated with a discharge of a portion of the reactor contents that occurs with settling legs on slurry reactors.

The temperature to which the polymerization effluent slurry which is discharged from the reactor is heated during transit to the first flash tank for vaporization is below the fusion temperature of the polymer. This may be accomplished by appropriate heating of this first transfer conduit. The quantity of heat to be supplied to the polymerization effluent during its transit through this first conduit to the first flash tank should preferably be at least equal to that quantity of heat which equals the heat of vaporization of that quantity of inert diluent which is to be flash vaporized in the first flash tank. This then will provide for the concentrated polymer solids formed in the first flash tank to be passed to the second flash tank to pass thereto at a higher solids temperature and thus facilitates the removal of residual diluent in the pores of such polymer solids by the operation of the second flash tank. That quantity of heat transferred to the polymerization effluent during its transit through the first transfer conduit to the first flash tank may even be greater, provided only that the quantity of heat so transferred will not cause the polymer solids therein to become heated to such a temperature at which they will tend to fuse or agglomerate one with another.

The concentrated polymer solids/slurry are discharged from the first flash tank into a first flash tank exit seal chamber of such a length (I) and diameter (d) so as to provide a volume sufficient to maintain a volume of concentrated polymer solids/slurry sufficient to maintain a pressure seal in the exit seal chamber. The concentrated polymer solids/slurry are discharged from the exit seal chamber through an exit seal chamber reducer to a second transfer conduit which communicates the concentrated polymer solids/slurry as a plug flow to a second flash tank. The exit seal chamber reducer is defined by substantially straight sides inclined at an angle to that of horizontal equal to or greater than the angle of slide of the concentrated polymer solids/slurry.

The pressure for the first flash step will vary depending on the nature of the diluent and unreacted monomers and the temperature of the polymerization effluent. Typically, pressures in the range of from about 140 psia to about 315 psia can be employed; more preferably from about 200 psia to about 270 psia; and most preferably from about 225 psia to about 250 psia.

The heat exchanging fluid used to condense the vapor from the first flash step is at a temperature in the range of from about 65° F to about 135°F. A preferred embodiment uses a heat exchange fluid at a temperature of from about 75°F to about 125°F. A most preferred embodiment uses a heat exchange fluid at a temperature of from about 85°F to about 115°F.

A further understanding of the present invention will be provided by referring to Fig. 1 which illustrates a system comprising an embodiment of the invention.

In the embodiment illustrated in Fig. 1, the polymerization is carried out in a loop reactor 1. The polymerization mixture is circulated by agitator 2. Diluent comonomer and monomer are introduced from the diluent storage vessel 40, the comonomer storage vessel 41, and the monomer storage vessel 42 through their respective treater beds 37, 38, and 39 through conduits 5, 4 and 3, respectively, connected to conduit 6. Catalyst is added through conduit 7. Normally, catalyst is introduced as a suspension in a hydrocarbon diluent.

Polymerization effluent is removed from the loop by continuous discharge through the single point discharge valve 8. The polymerization effluent passes from the discharge valve 8 to a conduit 9 which is provided with a line heater 10 and into the first flash tank 11 which separates vaporized liquid medium from polymer slurry/solids. Conduit 9 has an indirect heat exchange means such as a flash line heater 10.

Vaporized liquid medium comprising diluent and unreacted monomers exit the first flash tank 11 via transfer conduit 12 through which it is passed into a cyclone 13 which separates entrained polymer solids from the vapor. Polymer solids separated by the cyclone are passed via line 14 through a dual valving assembly designed to maintain a pressure seal below cyclone 13 to a lower pressure flash tank 15.

The concentrated polymer solids/slurry in the bottom of the first flash tank 11 continuously settles by sliding along the straight line bottom surface 16 thereof into the seal chamber 17 which is illustrated in enlargement Figure 2. A polymer solids/slurry level 43 is maintained in the seal chamber 17 to eliminate plugging tendencies in flash tank 11 and to form a pressure seal so that flash tank 11 can operate at a substantially higher pressure than flash tank 15. Polymer slurry/solids are continuously discharged from the seal chamber 17 into the lower pressure flash tank 15. The length (l), diameter (d), and volume of the seal chamber 17 and the geometry of the seal chamber exit reducer 18 are chosen so as to provide a variable residence time and provide a continuous plug flow of concentrated polymer solids/slurry to minimize "dead" space and reduce plugging tendencies. The seal chamber 17 length must be sufficient to allow practical level measurement and control. Typical residence times of the concentrated polymer solid/slurry in the seal chamber 17 are from 5 seconds to 10 minutes, preferable residence times are from 10 seconds to 2 minutes and most preferable residence times from 15 - 45 seconds. The continuous plug flow of concentrated polymer solids/slurry forms a pressure seal wherein the concentrated polymer solids/slurry have an l/d ratio inside the seal chamber 17 which is typically 1.5 to 8, preferable l/d is 2 to 6 and most preferable is 2.2 to 3. Typically the seal chamber exit reducer 18 sides are inclined, relative to the horizontal, 60 - 85 degrees, preferable 65 - 80 degrees and most preferable 68 - 75 degrees. The seal chamber exit reducer 18 geometry is defined by substantially straight sides inclined at an angle to that of horizontal equal to or greater than the angle of slide of the concentrated polymer slurry/solids and communicates the concentrated polymer solid/slurry to a second transfer conduit 19 which communicates with a feed inlet of flash tank 15. In flash tank 15 substantially all of any remaining inert diluent and unreacted monomer in the concentrated polymerization effluent is vaporized and taken overhead via conduit 20 to a second cyclone 21.

The major portion of the liquid medium in the polymerization effluent will have been taken to cyclone 13 as vapor. The vapor after having the entrained polymer solids removed is passed via conduit 22 through a heat exchanger 23 wherein the vapor at a pressure from about 140 psia to about 315 psia is condensed by indirect heat exchange with a heat exchange fluid such as to eliminate the need for compression.

The condensed liquid medium comprising diluent and unreacted monomers is then passed to an accumulator 24. A pump 25 is provided for conveying the condensed liquid medium back to the polymerization zone by line 26.

The polymer solids in the lower pressure flash tank 15 are passed via line 27 to a conventional dryer 28. The vapor exiting the secondary cyclone 21, after filtration in filter unit 29, is passed by line 30 to a compressor 31 and the compressed vapors are passed through a conduit 32 to a condenser 33 where vapor is condensed and the condensate is passed through conduit 34 to storage vessel 35. The condensed liquid medium in the storage vessel 35 is typically vented overhead for removal of light-end contaminants. The inert diluent can be returned to the process through a treater bed 37 to remove catalyst poisons or distilled in unit 36 for more complete removal of light-ends and then returned to the process through a treater bed.

Having broadly described the present invention it is believed that the same will become even more apparent by reference to the following examples. It will be appreciated that the examples are presented solely for the purpose of illustration and should not be construed as limiting the invention.

### EXAMPLES

### Example 1

A typical ethylene polymerization process would be conducted at a temperature of about 215°F and a pressure of 565 psia. An example of such a process would result in a polymerization effluent of about 83,000 pounds per hour comprising about 45,000 pounds per hour of polyethylene polymer solids and about 38,000 pounds per hour of isobutane and unreacted monomers. The continuously discharged polymerization effluent is flashed in the first flash tank at a pressure of about 240 psia and a temperature of about 180°F to remove overhead about 35,000 pounds per hour of diluent and unreacted monomer vapors and entrained particulates. Auxiliary heat to impart an additional quantity of heat to the polymerization effluent is supplied by appropriate heating means during the transit between the discharge valve and the first flash tank. After removal of the fines, the isobutane vapor is condensed, without compression, by heat exchange at a pressure of about 240 psia and a temperature of about 135°F. The polymer slurry/solids discharging from the bottom of the first flash tank into the seal chamber form a continuous plug flow of concentrated polymer slurry/solids, which provides a pressure seal, with an l/d ratio of the plug of polymer slurry/solids of 2.5 in an 8'4" long seal chamber having an l/d ratio of 5.5 and with a cone angle of about 68° on the seal chamber exit reducer. The residence time of the continuous plug flow of concentrated polymer slurry/solids is about 16 seconds. The concentrated polymer slurry/solids are continuously discharged from the bottom of the first flash tank at a temperature of about 180°F and a pressure of about 240 psia through a seal chamber, seal chamber exit reducer, and a second transfer conduit into a feed inlet on a second flash tank. The remaining liquid medium in the concentrated polymer slurry/solids communicated to the second flash tank is flashed at a temperature of about 175° F and at a pressure of about 25 psia to remove about 4,300 pounds per hour of isobutane and unreacted monomers which are condensed by compression and heat exchange.

### Example 2

A typical ethylene polymerization process would be conducted at a temperature of about 215°F and a pressure of 565 psia. An example of such a process would result in a polymerization effluent of about 83,000 pounds per hour comprising about 45,000 pounds per hour of polyethylene polymer solids and about 38,000 pounds per hour of isobutane and unreacted monomers. The continuously discharged polymerization effluent is flashed in the first flash tank at a pressure of about 240 psia and a temperature of about 175°F to remove overhead about 23,000 pounds per hour of diluent and unreacted monomer vapors and entrained particulates. After removal of the fines, the isobutane vapor is condensed, without compression, by heat exchange at a pressure of about 240 psia and a temperature of about 112°F. The polymer slurry/solids discharging from the bottom of the first flash tank into the seal chamber form a continuous plug flow of concentrated polymer slurry/solids, which provides a pressure seal, with an l/d ratio of the plug of polymer slurry/solids of 2.5 in an 8'4" long seal chamber with an l/d ratio of 5.5 and with a cone angle of about 68° on the seal chamber exit reducer. The residence time of the continuous plug flow of concentrated polymer slurry/solids in the seal chamber is about 16 seconds. About 60,000 pounds per hour of concentrated polymer slurry/solids are continuously discharged from the bottom of the first flash tank at a temperature of about 175°F and a pressure of about 240 psia through a seal chamber, seal chamber exit reducer and a second transfer conduit into a feed inlet on a second flash tank. The remaining liquid medium in the concentrated polymer slurry/solids communicated to the second flash tank is flashed at a temperature of about 125°F and at a pressure of about 25 psia to remove about 16,000 pounds per hour of isobutane and unreacted monomer which are condensed by compression and heat exchange.

## Claims

1. A process for removing and recovering polymerization liquid medium from a polymer produced in a reactor as a polymer slurry of particulate polymer solids suspended in a liquid medium comprising an inert diluent and unreacted monomers, the process comprising the step of;
i) using an apparatus to remove and recover polymerization liquid medium from the polymer, the apparatus comprising
a discharge valve for continuously discharging a portion of said polymer slurry from said reactor into a first transfer conduit;
said first transfer conduit communicating said polymer slurry therein into a first flash tank having a bottom communicating to a first flash tank exit seal chamber of a length (1) and a diameter (d) which provides a volume sufficient to maintain a volume of polymer solids/slurry sufficient to maintain a pressure seal in said seal chamber;
said seal chamber having a seal chamber exit reducer, defined by substantially straight sides inclined at an angle to that of horizontal equal to or greater than the angle of slide of the polymer solids which remain after removal of 50 to 100% of the inert diluent therefrom which communicates a continuous flow of concentrated polymer solids/slurry from said first flash tanks exit seal chamber to a second transfer conduit which communicates said continuous flow of concentrated polymer solids/slurry to a second flash tank; and
said second flash tank operating at a substantially lesser pressure than that of said first flash tank such that essentially all of any remaining inert diluent and monomer is vaporized and communicated to a diluent and monomers recovery system through a flash tank overhead exit and essentially dried polymer solids are communicated to a dryer/storage tank.

2. The process of claim 1 wherein the first flash tank has a bottom defined by substantially straight sides inclined at an angle to that of horizontal equal to or greater than the angle of slide of the concentrated polymer solids/slurry which remain after removal of 50 to 100% of the inert diluent therefrom.

3. The process of claim 1 wherein said first flash tank exit seal chamber has a volume of a continuous plug flow of said concentrated polymer wherein said volume of continuous plug flow of said concentrated polymer/slurry solids has a length (1) to diameter (d) ratio (1/d) of from 1.5 to 8.0.

4. The process of claim 3 wherein said first transfer conduit is heated by a heater means capable of providing a quantity of heat sufficient to maintain said polymer slurry therein at a temperature below the fusion temperature of the polymer.

5. The process of claim 1 wherein the discharge valve discharges the polymerization effluent at a rate to maintain a constant pressure in the slurry reactor.

6. The process of any of claims 1 to 5 wherein said liquid diluent is isobutane.

## Patentansprüche

1. Verfahren zum Entfernen und Rückgewinnen von Polymerisationsflüssigkeitsmedium aus einem Polymer, das in einem Reaktor als Polymeraufschlämmung von teilchenförmigen Polymerfeststoffen produziert wird, die in einem flüssigen Medium suspendiert sind, das inertes Verdünnungsmittel und nicht umgesetzte Monomere umfasst, wobei das Verfahren den folgenden Schritt umfasst:
i) Verwendung einer Vorrichtung zum Entfernen und Rückgewinnen von Polymerisationsflüssigkeitsmedium aus dem Polymer, wobei die Vorrichtung umfasst:
ein Abziehventil zum kontinuierlichen Abziehen eines Teils der Polymeraufschlämmung aus dem Reaktor in eine erste Überführungsrohrleitung;
wobei die erste Überführungsrohrleitung die Polymeraufschlämmung darin mit einem ersten Abdampftank mit einem Boden in Verbindung bringt, der mit einer ersten Abdampftank-Auslassdichtungskammer mit einer Länge (1) und einem Durchmesser (d) in Verbindung steht, die ein ausreichendes Volumen zur Verfügung stellt, um ein ausreichendes Volumen an Polymerfeststoffen/Aufschlämmung aufrechtzuerhalten, um eine Druckdichtung in der Dichtungskammer aufrechtzuerhalten;
die Dichtungskammer ein Dichtungskammer-Auslassreduzierstück aufweist, das durch im Wesentlichen gerade Seiten definiert ist, die in einem Winkel gleich oder größer als der Rutschwinkel der Polymerfeststoffe zu der Horizontalen geneigt sind, welche Polymerfeststoffe nach Entfernung von etwa 50 bis 100 % des inerten Verdünnungsmittels davon verbleiben, das einen kontinuierlichen Strom konzentrierter Polymerfeststoffe/Auf-schlämmung von der ersten Abdampftank-Auslassdichtungskammer mit einer zweiten Überführungsrohrleitung in Verbindung bringt, die den kontinuierlichen Strom von konzentrierten Polymerfeststoffen/Aufschläm-mung in einen zweiten Abdampftank überträgt; und
den zweiten Abdampftank umfasst, der mit einem wesentlich niedrigeren Druck als wobei der erste Abdampftank derart arbeitet, dass im Wesentlichen das gesamte verbleibende inerte Verdünnungsmittel und Monomer verdampft wird und durch einen Abdampftank-Kopfproduktauslass in ein Verdünnungsmittel- und Monomerrückgewinnungssystem übertragen wird, und im Wesentlichen getrocknete Polymerfeststoffe in einen Trockner/Lagerungstank übertragen werden.

2. Verfahren nach Anspruch 1, bei dem der erste Abdampftank einen Boden aufweist, der durch im Wesentlichen gerade Seiten definiert ist, die in einem Winkel gleich oder größer als der Rutschwinkel der konzentrierten Polymerfeststoffe/Aufschlämmung zur Horizontalen geneigt sind, welche nach Entfernung von etwa 50 bis 100 % des inerten Verdünnungsmittels davon verbleiben.

3. Verfahren nach Anspruch 1, bei dem die erste Abdampftank-Auslassdichtungskammer ein Volumen einer kontinuierlichen Pfropfenströmung des konzentrierten Polymers aufweist, wobei das Volumen der kontinuierlichen Pfropfenströmung der konzentrierten Polymer/Aufschlämmungs-feststoffe ein Verhältnis von Länge (1) zu Durchmesser (d) (1/d) von etwa 1,5 bis etwa 8,0 aufweist.

4. Verfahren nach Anspruch 3, bei dem die erste Überführungsrohrleitung durch ein Heizmittel geheizt wird, das eine ausreichende Wärmemenge zuführen kann, um die Polymeraufschlämmung darin auf einer Temperatur unter der Schmelztemperatur des Polymers zu halten.

5. Verfahren nach Anspruch 1, bei dem das Abziehventil den Polymerisationsausfluss in einer Rate abzieht, um einen konstanten Druck in dem Aufschlämmungsreaktor aufrechtzuerhalten.

6. Verfahren nach einem der Ansprüche 1 bis 5, wobei das flüssige Verdünnungsmittel Isobutan ist.

## Revendications

1. Procédé pour éliminer et récupérer un milieu liquide de polymérisation à partir d'un polymère produit dans un réacteur sous forme d'une suspension de polymère constituée de matières solides polymères en particules en suspension dans un milieu liquide comprenant un diluant inerte et des monomères n'ayant pas réagi, le procédé comprenant l'étape :
i) d'utilisation d'un appareil pour éliminer et récupérer le milieu liquide de polymérisation à partir du polymère, appareil comprenant :
une vanne de déchargement pour décharger de manière continue une partie de ladite suspension de polymère dudit réacteur dans un premier conduit de transfert ;
ledit premier conduit de transfert faisant passer ladite suspension de polymère qui s'y trouve dans un premier réservoir de détente ayant une partie inférieure communiquant avec une chambre d'étanchéité de sortie du premier réservoir de détente, ayant une longueur (1) et un diamètre (d) donnant un volume suffisant pour maintenir un volume de matières solides polymères/suspension suffisant pour maintenir une étanchéité à la pression dans ladite chambre d'étanchéité ;
ladite chambre d'étanchéité comprenant un réducteur de sortie de chambre d'étanchéité, défini par des faces pratiquement droites inclinées d'un angle par rapport à l'horizontale égal ou supérieur à l'angle de glissement des matières solides polymères qui restent après élimination de 50 à 100 % du diluant inerte de ces matières, qui fait communiquer un courant continu de matières solides polymères concentrées/suspension de ladite chambre d'étanchéité de sortie de premier réservoir de détente à un second conduit de transfert qui fait passer ledit courant continu de matières solides polymères concentrées/suspension à un second réservoir de détente ; et
ledit second réservoir de détente fonctionne à une pression nettement inférieure à celle du premier réservoir de détente de telle sorte que pratiquement la totalité de toute quantité restante de diluant inerte et de monomère soit vaporisée et amenée à un système de récupération de diluant et de monomères à travers un orifice de sortie de tête de réservoir de détente et que les matières solides polymères pratiquement sèches soient amenées à un dispositif de séchage/réservoir de stockage.

2. Procédé suivant la revendication 1, dans lequel le premier réservoir de détente a une partie inférieure définie par des côtés pratiquement droits inclinés d'un angle par rapport à l'horizontale égal ou supérieur à l'angle de glissement des matières solides polymères concentrées/suspension qui restent après élimination de 50 à 100 % du diluant inerte de ces matières.

3. Procédé suivant la revendication 1, dans lequel la chambre d'étanchéité de sortie du premier réservoir de détente a un volume d'écoulement bouchon continu dudit polymère concentré, ledit volume d'écoulement bouchon continu desdites matières solides polymères concentrées/suspension ayant un rapport de la longueur (1) au diamètre (d) (1/d) de 1,5 à 8,0.

4. Procédé suivant la revendication 3, dans lequel ledit premier conduit de transfert est chauffé par un moyen de chauffage capable de fournir une quantité de chaleur suffisante pour maintenir ladite suspension de polymère qui s'y trouve à une température inférieure à la température de fusion du polymère.

5. Procédé suivant la revendication 1, dans lequel la vanne de déchargement décharge l'effluent de polymérisation à une vitesse choisie de manière à maintenir une pression constante dans le réacteur à suspension.

6. Procédé suivant l'une quelconque des revendications 1 à 5, dans lequel ledit diluant liquide est l'isobutane.
